# EUROPEAN PATENT APPLICATION

(11) **EP 4 682 391 A1**
(43) Date of publication of application: **21.01.2026**
(21) Application number: 25188146.2
(22) Date of filing: 08.07.2025
(51) Int. Cl.: F16C 19/26, F16C 33/78

(54) **BEARING SEAL AND ITS APPLICATION**

(30) Priority: 17.07.2024 CN 202410954917
(71) Applicant: Aktiebolaget SKF, 415 50 Göteborg (SE)
(72) Inventor: Zhang, Yi, Shanghai, 201814 (CN); Netzer, Juergen, 51399 Burscheid (DE); Wei, De Yong, Shanghai, 200120 (CN)
(74) Representative: Kohl, Thomas

(57) **Abstract**

A bearing seal (2) includes a base portion (21) that can be fixedly assembled onto a bearing outer ring (5) and a sealing portion (20) that can form a lubricating grease seal with a flange (30) of a bearing inner ring (3). The sealing portion (20) includes a non-contact seal (24) that can prevent an outward leakage of lubricating grease inside a bearing (1) through a clearance fit and a contact seal (25) located on an axial outer side of the non-contact seal (24). In an assembled state, the sealing portion (20) as a whole can be accommodated within a substantially annular space (P) between an axial end portion (41) of a bearing cage (4) and an outer diameter surface (31) of the corresponding inner ring flange (30). Based on the above seal, the present invention also provides a rolling bearing (1), especially a cylindrical roller bearing unit used in wheel ends of a railway vehicle. The bearing (1) thus achieves a good sealing effect and can completely solve the leakage problem of the inside lubricating grease.

## Description

### Technical field of the invention

The present invention relates to a bearing seal, and also relates to a rolling bearing using such seal, especially to a cylindrical roller bearing unit used in a wheel rotation shaft of a railway vehicle.

### Background

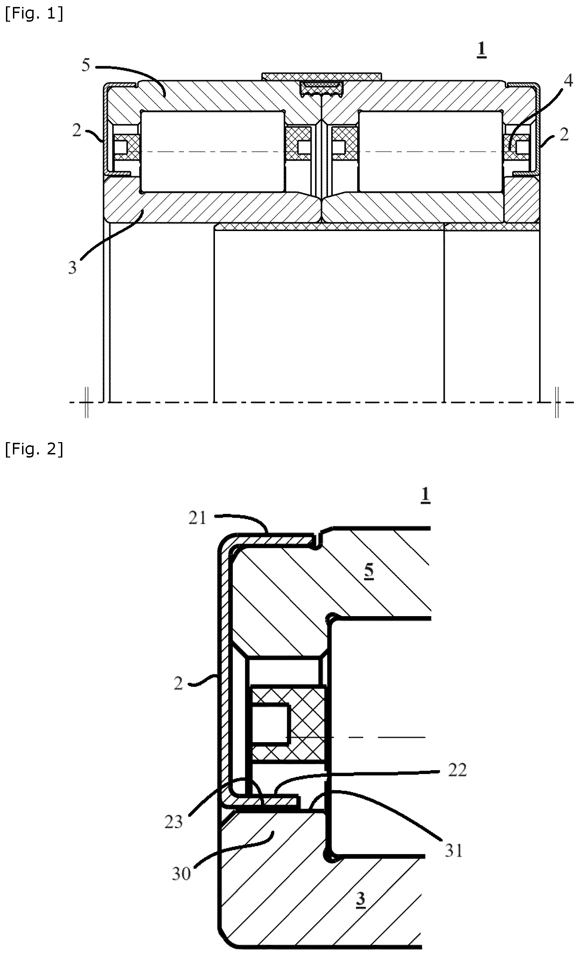

Fig. 1 shows a schematic cross-sectional view of a cylindrical roller bearing unit used in an existing railway vehicle. As can be seen from the figure, the bearing unit 1 is formed by two single-row cylindrical roller bearings combined together, and is respectively provided with a seal 2 on both axial sides not only to prevent an entrance of external contaminants into the interior of the bearing, but also to prevent an outward leakage of lubricating grease inside the bearing. Fig. 2 is a partial enlarged view of an area on the left side in Fig. 1 where the seal is located. As clearly shown in the figure, the seal 2 is independently constituted by a rigid insert (typically such as a metal stamping piece) with a substantially C-shaped cross-section, and includes a base portion 21 that can be fixedly assembled onto an outer ring 5 and a non-contact seal 22 that can form a clearance fit with an outer diameter surface 31 of a flange 30 of an inner ring 3. Wherein the non-contact seal 22 is formed by an axial extending portion (hereinafter still marked as 22) of the rigid insert at its radial free end and is substantially parallel to the outer diameter surface 31 of the inner ring flange 30, forming a narrow and long gap passage 23 therebetween. The lubricating grease usually has a certain viscosity, therefore when the gap passage 23 is narrow enough (for example, a radial dimension being less than 0.8 millimetres), the outward leakage of the lubricating grease from the interior of the bearing may be prevented even by the non-contact seal.

However, in an actual application, due to the changes in load and temperature, a small amount of lubricating grease inside the bearing still overflows out of the gap passage 23. Especially after operating for a period of time, a base oil precipitation will also occur on the lubricating grease itself. Since the viscosity of the base oil is relatively low and its fluidity is relatively good, it is easy to seep out from the gap. All of the above factors will lead to the leakage of the lubricating grease, although it is not serious in most cases. Even so, the leaked lubricating grease on one hand will pollute the environment, and on the other hand will create the illusion of bearing failure, which brings inconvenience to the use and maintenance for users. Although there is no shortage of high-performance seals in the prior art, in the above bearing unit, since the radial spacing between an axial end portion of a cage and the outer diameter surface of the inner ring flange is too narrow (usually not exceeding 6 mm), which causes that conventional contact seals (for example, sealing lips) are difficult to fit therein, it is impossible to solve the above problems with the prior art.

Reality calls for a bearing seal that not only can prevent the leakage of the lubricating grease, but also can adapt to the narrow radial spacing between the cage and the flange.

### Summary of the invention

To solve the above technical problems, the present invention provides a bearing seal, including a base portion that can be fixedly assembled onto a bearing outer ring and a sealing portion that can form a lubricating grease seal with a flange of a bearing inner ring. The sealing portion includes a non-contact seal that can prevent an outward leakage of lubricating grease inside a bearing through a clearance fit and a contact seal located on an axial outer side of the non-contact seal. In an assembled state, the sealing portion in its entirety (i.e., as a whole) is accommodated within a substantially annular space between an axial end portion of a bearing cage and an outer diameter surface of the corresponding inner ring flange.

The above seal completely solves the problem of grease leakage caused by the non-contact seal by providing the contact seal on the axial outer side of the non-contact seal. Moreover, the seal also completely solves the following realistic problem by providing its sealing portion as a whole within the annular space between the axial end portion of the bearing cage and the outer diameter surface of the inner ring flange: the existing seal cannot be fit into the annular space, since the radial dimension of the sealing portion is too large. The above solution is based on the design of the sealing portion (especially the sealing lip) that is flat and has a small radial dimension, which fills the gap of existing seals. The improved seal can be directly applied to existing products including a railway bearing, and has high interchangeability and application convenience.

Based on the above seal, the present invention also provides a rolling bearing. The bearing thus achieves a good sealing effect and can completely solve the leakage problem of the lubricating grease.

### Brief description of the figures

The various embodiments and beneficial technical effects of the present invention are described in detail below in conjunction with the figures.
Fig. 1 shows a schematic cross-sectional view of an existing railway bearing unit;
Fig. 2 shows a partial enlarged view of an area on the left side in Fig. 1 where a seal is located;
Fig. 3 shows a schematic cross-sectional view of an improved bearing seal assembled on the bearing; and
Fig. 4 shows a partial enlarged view of an area in Fig. 3 where a sealing portion is located.

### Detailed description of the invention

In the following description, same or similar reference numerals are always used to denote same or similar components. Terms indicating directions, for example "axial", "radial" and "circumferential (direction)", each refer to the axial, radial and circumferential (direction) of the component being described, unless otherwise defined or specified. In addition, "inner side (of the bearing)" and "outer side (of the bearing)" are based on the internal space of the bearing defined by the inner and outer rings of the bearing, and respectively correspond to the axial right and left sides in Figs. 2 to 4.

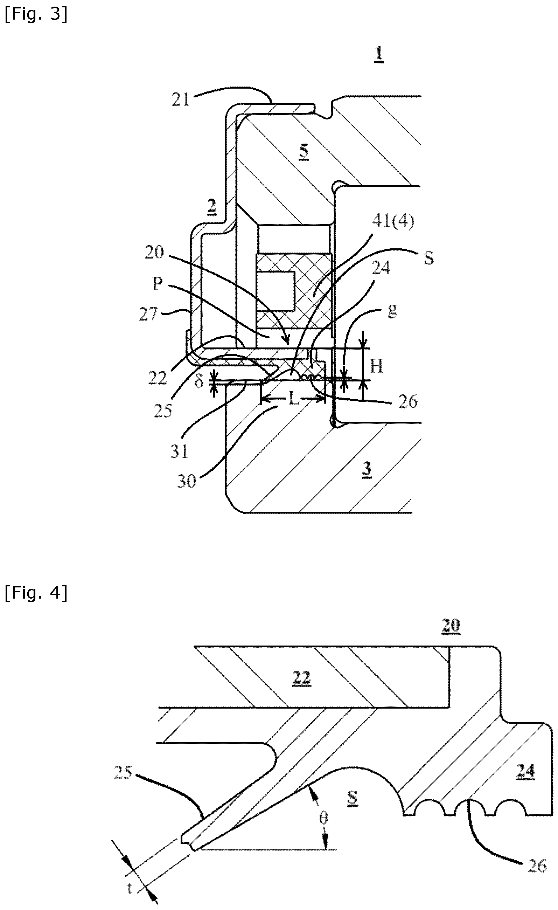

Fig. 3 shows a schematic cross-sectional view of an improved bearing seal assembled on a bearing. Fig. 4 further shows a partial enlarged view of a sealing portion of the seal. As can be seen from the above figures, the sealing portion 20 of the improved seal 2 is formed by an axial extending portion 22 of a rigid insert at its radial free end and a flexible material attached to the extending portion. The flexible material may be rubber or other elastomeric materials, typically such as nitrile rubber (NBR), hydrogenated nitrile rubber (HNBR), or fluororubber (FKM), and a non-contact seal 24 capable of preventing an outward leakage of lubricating grease inside the bearing through clearance fit and a contact seal 25 located on an axial outer side of the non-contact seal 24 for further preventing the leakage of the lubricating grease are formed by molding and/or injecting.

Different from the non-contact seal (i.e., the axial extending portion of the rigid insert) 22 described in the Background, the non-contact seal 24 formed by the flexible material is formed with a tooth-shaped structure 26 on its side facing an outer diameter surface 31 of an inner ring flange 30 to prevent the leakage of the lubricating grease. As more clearly shown in Fig. 4, the toothed-shaped structure 26 includes three circumferential grooves each with a semi-circular cross-section. Of course, the grooves may also have other geometric shapes, for example triangular, rectangular, or trapezoidal. The number of grooves may also be 1 to 2 or equal to or more than 4. In addition, a radial (gap) dimension g of a gap passage 23 is set between 0.14 and 0.68 mm, preferably between 0.25 and 0.50 mm.

In the illustrated embodiment, the contact seal 25 includes at least one contact sealing lip (hereinafter still marked as 25). To reduce the temperature rise caused by friction, the sealing lip 25 is suitable for being lubricated with low-friction lubricating grease, which is filled within a lubricating grease storage space S when leaving factory (for details please refer to following descriptions). In addition, the sealing lip 25 is also provided to be capable of forming, in an assembled state, a contact pressure of 4 to 30 newtons per meter (i.e., formed on a contact trajectory of one meter in length) with the outer diameter surface 31 of the inner ring flange 30. In a preferred case, the contact pressure of the sealing lip 25 is set between 4 and 14 newtons per meter.

The sealing lip with the above contact pressure on one hand can prevent the leakage of the lubricating grease, and on the other hand will not cause dramatic temperature rise due to excessive friction. In a high-speed operation simulation test at 1200 rpm, the overall temperature level of the bearing caused by the friction of the sealing lip does not exceed 70°C. In addition, the sealing lip with the above contact pressure also has a good pressure release mechanism. When the internal pressure of the bearing rises, the sealing lip, due to a relatively small contact pressure, is more likely to open, thus the internal pressure of the bearing is easily released, avoiding excessive pressure accumulation and triggering breakthrough grease leakage of the sealing lip.

To achieve the above performances, the sealing lip 25 is designed to adopt a lip thickness (t) of 0.2 to 1.0 mm, form an angle (θ) of 20 to 40 degrees with the axial direction, and have an interference fit (δ) of 0.2 to 1.2 mm with the outer diameter surface. In a preferred case, the sealing lip 25 may adopt a lip thickness of 0.4 ± 0.1 mm, form an angle of 25 to 35 degrees with the axial direction, and have an interference fit of 0.3 to 0.9 mm with the outer diameter surface. It is not difficult to understand that a smaller lip thickness and a smaller interference fit lead to a smaller contact pressure formed by the sealing lip. Moreover, in the case where the length of the sealing lip is limited by a narrow radial space, a smaller axial angle further allows to configure a longer sealing lip. As described above, in the case where the internal and external pressure differences of the bearing are the same, the longer sealing lip, due to a larger pressure it withstands, is more likely to open, thereby the internal pressure of the bearing is easily released.

In the illustrated embodiment, the sealing lip 25 extends toward the axial outer side (the left side in the figures) of the bearing, thus forming the lubricating grease storage space S with the non-contact seal 24. By the way, the lubricating grease used for the seal is different from the lubricating grease used for the bearing in terms of category, but the use of the former is beneficial in preventing the overflow of the latter. As a preferred embodiment, the seal 2 may also be formed with a protruding portion 27 on the radial outer side of its sealing portion 20 that protrudes toward the axial outer side of the bearing, allowing the lubricating grease to be squeezed by rolling elements to converge toward both sides of the bearing, which helps to avoid the overflow of such lubricating grease through the gap passage 23 of the non-contact seal 24.

As a preferred embodiment, the sealing portion 20 may be formed into a flat structure. After assembly, its maximum radial dimension (the maximum height beyond the outer diameter surface 31) H does not exceed 4 mm, thus forming a sufficient (2 mm or above) safety distance away from an axial end portion 41 of a cage 4 on the radial outer side (the upper side in the figures). The above design ensures that the sealing portion 20 can be adapted into a radial narrow annular space P, and will not interfere with the cage 4 on the radial outer side during assembly and operation, thus making it particularly suitable for a cylindrical roller bearing unit used in a railway vehicle with the following boundary dimensions: an inner diameter d of the bearing = 120 mm, an outer diameter D of the bearing = 215 mm or 220 mm; or, the inner diameter d = 130 mm, the outer diameter D = 240 mm, etc. The cylindrical roller bearing unit with the above boundary dimensions is mainly applied to the wheel ends of the railway vehicle, and belongs to non-ISO standard bearing series. Since the radial dimension of its annular space P does not exceed 6 mm and the axial dimension is only 12.3 mm, it is difficult to find existing seals that can be adapted into it. In a further preferred case, the radial height H of the sealing portion 20 may be set between 3 and 4 millimetres.

As a further preferred embodiment, a length-width ratio L/H of the axial dimension L to the radial dimension H of the sealing portion 20 may be configured to be between 1.5:1 and 2.5:1. Here, the axial dimension L is defined as a total coverage range of the contact seal (sealing lip) 25 and the non-contact seal 24 in the axial direction after assembly, as marked in the figure. The above ratio not only facilitates the sealing portion 20 to be adapted into the radial narrow annular space P, but also allows the contact seal 25 and the non-contact seal 24 to each have a sufficient axial space. The sufficient axial space on one hand allows the non-contact seal 24 to adopt a longer gap passage 23, thus enhancing the sealing effect on the lubricating grease inside the bearing, and on the other hand also allows the sealing lip 25 to adopt a smaller axial angle (θ), thus achieving smaller contact pressure and opening pressure. In addition, the sealing portion 20 with the above ratio also allows for a formation of a sufficiently large lubricating grease storage space S between the sealing lip 25 and the non-contact seal 24. In conclusion, the flat structure with the above ratio facilitates to configure the sealing portion 20 having the best-performance within the radial narrow annular space P.

From the above description, it can be seen that the improved seal can be used to directly replace the original seal of the bearing without changing the existing structure of the bearing, thereby it has universal interchangeability and application convenience. It is not difficult to understand that the above seal is also applicable to other types of rolling bearings that are limited by the narrow radial spacing between the cage and the inner ring flange, including but not limited to a tapered roller bearing and various types of ball bearings.

It should be noted that rubber and other flexible materials have complex material properties, therefore the structure, process, and tolerance of the sealing portion will all have a significant impact on its performance. The structural features and parameter ranges of the above seal are solutions obtained by the inventor(s) through repeated designs, simulations and tests, and are not easily obtainable merely based on theory, experience and imagination.

The bearing seal and its application described above are not limited by the specific embodiments, and more general technical solutions will be subject to the limitations of the accompanying claims. Any modifications and improvements to the present invention are within the protection scope of the present invention, provided they conform to the limitations of the accompanying claims.

## Claims

1. A bearing seal (2), comprising a base portion (21) that can be fixedly assembled onto a bearing outer ring (5) and a sealing portion (20) that can form a lubricating grease seal with a flange (30) of a bearing inner ring (3), the sealing portion (20) comprising a non-contact seal (24) that can prevent an outward leakage of lubricating grease inside a bearing (1) through a clearance fit and a contact seal (25) located on an axial outer side of the non-contact seal (24), **characterized in that**: in an assembled state, the sealing portion (20) in its entirety is accommodated within a substantially annular space (P) between an axial end portion (41) of a bearing cage (4) and an outer diameter surface (31) of the corresponding inner ring flange (30).

2. The bearing seal (2) according to claim 1, **characterized in that**: in the assembled state, a maximum radial dimension H of the sealing portion (20) does not exceed 4 mm.

3. The bearing seal (2) according to claim 2, **characterized in that**: the sealing portion (20) is formed by an axial extending portion (22) of a rigid insert and a flexible material attached to the extending portion (22) to form the contact seal (24) and the non-contact seal (25), an overall axial dimension L and a radial dimension H of which have a length-to-width ratio L/H between 1.5 and 2.5.

4. The bearing seal (2) according to claim 3, **characterized in that**: the contact seal (25) comprises at least one sealing lip, which forms a contact pressure of 4 to 30 newtons per meter with the outer diameter surface (31) in the assembled state.

5. The bearing seal (2) according to claim 4, **characterized in that**: the sealing lip (25) is made of nitrile rubber, hydrogenated nitrile rubber, or fluororubber, forms an angle (θ) of 20 to 40 degrees with an axial direction, has a lip thickness (t) of 0.2 to 1.0 mm, and forms an interference fit (δ) of 0.2 to 1.2 mm with the outer diameter surface (31).

6. The bearing seal (2) according to any one of claims 1 to 5, **characterized in that**: the non-contact seal (24) is formed with a toothed-shaped structure (26) on its side facing the outer diameter surface (31) to prevent the leakage of the lubricating grease.

7. The bearing seal (2) according to claim 6, **characterized in that**: the bearing seal (2) is formed with a protruding portion (27) on a radial outer side of the sealing portion (20) that protrudes toward the axial outer side of the bearing.

8. The bearing seal (2) according to claim 6, **characterized in that**: the sealing lip (25) extends facing the outer side of the bearing, and forms a lubricating grease storage space (S) with the non-contact seal (24).

9. A rolling bearing (1) comprising the bearing seal (2) according to any one of the preceding claims.

10. The rolling bearing (1) according to claim 9, **characterized in that**: the rolling bearing (1) is a cylindrical roller bearing unit.
